# EUROPEAN PATENT APPLICATION

(11) **EP 4 283 807 A1**
(43) Date of publication of application: **29.11.2023**
(21) Application number: 23170076.6
(22) Date of filing: 26.04.2023
(51) Int. Cl.: H02J 1/10, B60L 50/61, H02J 7/34, F02N 11/08

(54) **RESCUE DEVICE OF BOOSTING 24 VOLTS TO SUPERCAPACITOR FOR VEHICLE(S) AND METHOD OF CONTROLLING THE SAME**

(30) Priority: 19.05.2022 TW 111118785
(71) Applicant: Reduce Carbon Energy Develop Co., Ltd., New Taipei City 238 (TW)
(72) Inventor: CHEN, FU-CHIEH, 238 NEW TAIPEI CITY (TW)
(74) Representative: Brown, Michael Stanley

(57) **Abstract**

A rescue device (1) of boosting 24 volts to a supercapacitor for vehicle(s) and a method of controlling the same, the rescue device (1) is electrically connected a circuit system in which a vehicle battery pack (10) and a vehicle electrical control device (13) are connected parallelly. The rescue device (1) includes a booster module (14), a supercapacitor module (15), a first relay (16), a second relay (17), a third relay (18), a first positive-electrode circuit (21), a second positive-electrode circuit (22), a negative-electrode circuit (23), and a rescue control module (30). The rescue control module (30) acquires a power from the vehicle battery pack (10) via the second positive-electrode circuit (22) based on a low voltage of the vehicle battery pack (10) and boosts an output voltage to charge the supercapacitor module (15) via the booster module (14). After the supercapacitor module (15) is rechargeable completely, it supplies the power via the first positive-electrode circuit (21) to start the vehicle electrical control device (13), thus rescuing the vehicle.

## Description

### FIELD OF THE INVENTION

The present invention relates to a rescue device of boosting 24 volts to a vehicle.

### BACKGROUND OF THE INVENTION

At present, industrial vehicles or large vehicles are usually powered by 24V (24 volts) rechargeable batteries. The 24V batteries are comprises of two 12V (12 volts) rechargeable batteries connected in series, and rely solely on the two rechargeable batteries to provide power to start a motor of the vehicle. If there is a power leakage or any battery is broken, a total voltage of the two rechargeable batteries will drop, and the motor cannot start an engine of the vehicle.

The present invention has arisen to mitigate and/or obviate the aforedescribed disadvantages.

### SUMMARY OF THE INVENTION

The primary object of the present invention is to provide a rescue device of boosting 24V (24 volts) to a supercapacitor for vehicle(s) and a method of controlling the same which are capable of overcoming the shortcomings of the conventional rescue device.

To obtain above-mentioned objective, a rescue device of boosting 24V to a supercapacitor for vehicle(s) and a method of controlling the same provided by the present invention, the rescue device is electrically connected a circuit system in which a vehicle battery pack and a vehicle electrical control device are connected parallelly. The rescue device includes a booster module, a supercapacitor module, a first relay, a second relay, a third relay, a first positive-electrode circuit, a second positive-electrode circuit, a negative-electrode circuit, and a rescue control module.

The rescue control module acquires a power from the vehicle battery pack via the second positive-electrode circuit based on a low voltage of the vehicle battery pack and boosts an output voltage to charge the supercapacitor module via the booster module. After the supercapacitor module is rechargeable completely, it supplies the power via the first positive-electrode circuit to start the vehicle electrical control device, thus rescuing the vehicle.

### BRIEF DESCRIPTION OF THE DRAWINGS

FIG. 1 is a block diagram showing the assembly of a rescue device of boosting 24V (24 volts) to a supercapacitor for vehicle(s) is electrically connected with a circuit system according to a preferred embodiment of the present invention.
FIG. 2 is a schematic view showing the assembly of the rescue device of boosting 24V to the supercapacitor for vehicle(s) according to the preferred embodiment of the present invention.
FIG. 3 is a schematic view showing the operation of the rescue device of boosting 24V to the supercapacitor for vehicle(s) according to the preferred embodiment of the present invention.
FIG. 4 is another schematic view showing the operation of the rescue device of boosting 24V to the supercapacitor for vehicle(s) according to the preferred embodiment of the present invention.
FIG. 5 is also another schematic view showing the operation of the rescue device of boosting 24V to the supercapacitor for vehicle(s) according to the preferred embodiment of the present invention.
FIG. 6 is still another schematic view showing the operation of the rescue device of boosting 24V to the supercapacitor for vehicle(s) according to the preferred embodiment of the present invention.
FIG. 7 is another schematic view showing the operation of the rescue device of boosting 24V to the supercapacitor for vehicle(s) according to the preferred embodiment of the present invention.

### DETAILED DESCRIPTION OF THE PREFERRED EMBODIMENTS

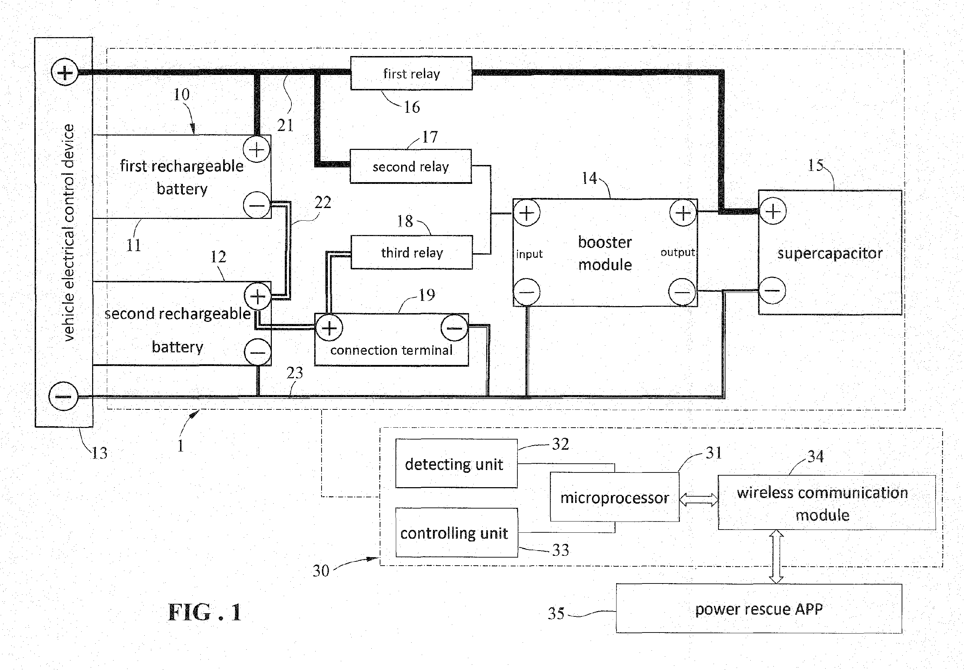

With reference to FIG. 1, a rescue device 1 of boosting 24V (24 volts) to a supercapacitor for vehicle(s) is electrically connected a circuit system in which a vehicle battery pack 10 and a vehicle electrical control device 13 are connected parallelly. The vehicle battery pack 10 includes a first rechargeable battery 11 and a second rechargeable battery 12 connected with the first rechargeable battery 11. The vehicle battery pack 10 includes at least one leadacid battery, at least one lithium-ion battery or other batteries. The vehicle electrical control device 13 is any one of a dynamo, a drive motor, and other electrical control device (such as an electric door or a computer).

The rescue device 1 includes a booster module 14, a supercapacitor module 15, a first relay 16, a second relay 17, a third relay 18, a connection terminal 19, and a rescue control module 30.

The booster module 14 includes an output electrode parallelly connected with the supercapacitor module 15.

A positive electrode of the vehicle electrical control device 13, a positive electrode of the first rechargeable battery 11, and a positive electrode of the supercapacitor module 15 are connected parallelly. The first relay 16 is electrically connected with the positive electrode of the supercapacitor module 15 and the positive electrode of the first rechargeable battery 11, such that the positive electrode of the vehicle electrical control device 13, the positive electrode of the first rechargeable battery 11, the first relay 16 and the positive electrode of the supercapacitor module 15 are electrically connected to produce a first positive-electrode circuit 21.

The second relay 17 is electrically connected with the positive electrode of the first rechargeable battery 11 and an input positive electrode of the booster module 14, and the second relay 17 is electrically connected with the first positive-electrode circuit 21.

A negative electrode of the first rechargeable battery 11, a positive electrode of the second rechargeable battery 12, the third relay 18 are electrically connected. The third relay 18 is electrically connected with an input positive electrode of the booster module 14, such that the negative electrode of the first rechargeable battery 11, the positive electrode of the second rechargeable battery 12, the third relay 18 and the input positive electrode of the booster module 14 are electrically connected to produce a second positive-electrode circuit 22.

A negative electrode of the vehicle electrical control device 13, a negative electrode of the second rechargeable battery 12, the input positive electrode of the booster module 14, and a negative electrode of the supercapacitor module 15 are electrically connected to produce a negative-electrode circuit 23.

A positive electrode of the connection terminal 19 is electrically connected with the positive electrode of the second rechargeable battery 12 and the third relay 18. A negative electrode of the connection terminal 19 is electrically connected with the negative-electrode circuit 23.

The first relay 16, the second relay 17, and the third relay 18 are replaced by a Metal-Oxide-Semiconductor (MOS) or Metal-Oxide-Semiconductor Field-Effect Transistor (MOSFET).

The rescue control module 30 includes a microprocessor 31, a detecting unit 32 and a controlling unit 33 which are both commanded, controlled, ordered, and managed by the microprocessor 31. The detecting unit 32 is configured to detect a voltage of the first rechargeable battery 11, the second rechargeable battery 12, the first positive-electrode circuit 21, the second positive-electrode circuit 22, and the supercapacitor module 15. The detecting unit 32 is also configured to detect a total voltage of the first rechargeable battery 11 and the second rechargeable battery 12. The controlling unit 33 is selectively control an ON or OFF of the first relay 16, the second relay 17 and the third relay 18 based on a detected result of the detecting unit 32. The microprocessor 31 is electrically communicated with a power rescue APP 35 via a wireless communication module 34, and the power rescue APP 35 is built in a smart mobile device (not shown). The wireless communication module 34 is applicable for a wireless communication but is not limited for LoRa, NB-IoT, ZigBee, WI-FI, Bluetooth, and satellite communication.

In application, the vehicle battery pack 10 includes a first rechargeable battery 11 and a second rechargeable battery 12 connected with the first rechargeable battery 11, wherein a voltage of the first rechargeable battery 11 and the second rechargeable battery 12 is 12 volts (V). The booster nodule 14 is configured to boost an input voltage of 9V-15V to an output voltage of 28V. A set value of an operating voltage of the supercapacitor module 15 is 24V.

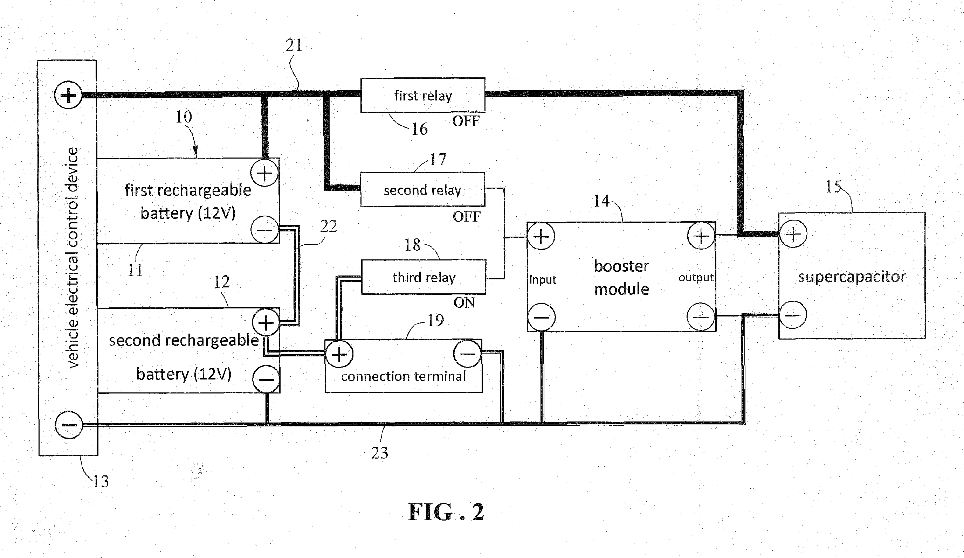

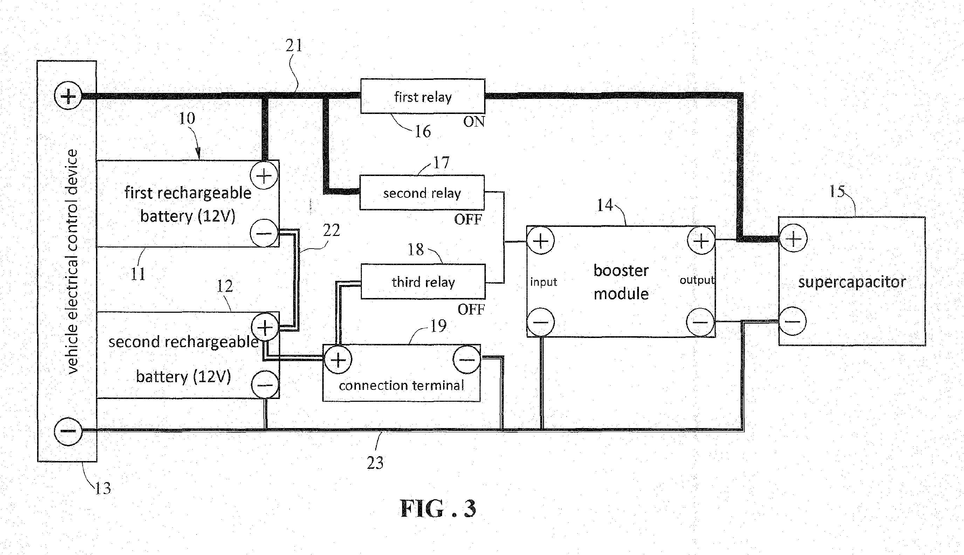

Referring to FIGS. 2 and 3, a method of using the supercapacitor module 15 to supply a power to the vehicle comprises steps of
1) detecting whether the total voltage of the first rechargeable battery 11 and the second rechargeable battery 12 is more than a threshold value 15V by using the detecting unit 32 as illustrated in FIG. 2 (for example, the voltage of each of the first rechargeable battery 11 and the second rechargeable battery 12 is 12V, as shown in FIG. 2), wherein the controlling unit 33 controls the OFF of the first relay 16, the OFF of the second relay 17, and the ON of the third relay 18 so as to acquire the power from the first rechargeable battery 11 and the second rechargeable battery 12 via the second positive-electrode circuit 22 and to boost an output voltage of 28V to charge the supercapacitor module 15 via the booster module 14.
2) detecting the supercapacitor module 15 to reach an operating voltage of 24V by using the detecting unit 32, as shown in FIG. 3, wherein the controlling unit 33 controls the ON of the first relay 16, the OFF of the second relay 17 and the OFF of the third relay 18 via the first positive-electrode circuit 21, and the supercapacitor module 15 and the vehicle battery pack 10 operate to supply the power to the vehicle electrical control device 13.

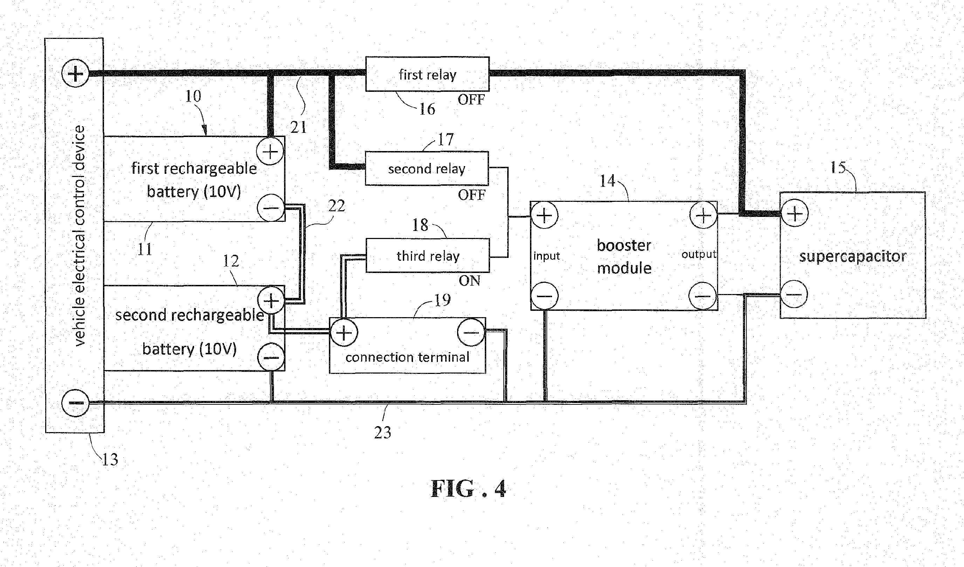

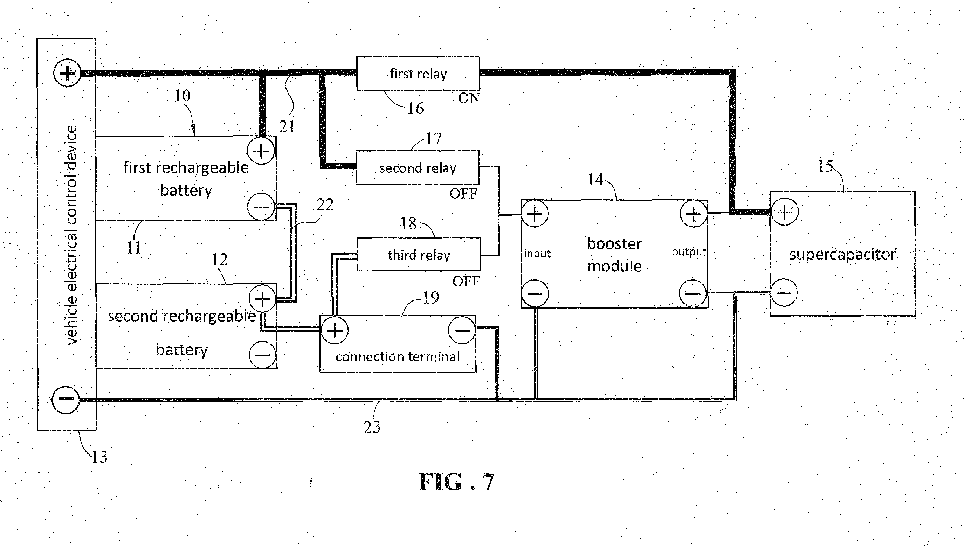

Thereby, the rescue device 1 of the present invention is controlled according to following different situations:
In a first situation, when the vehicle battery pack 10 is in a low voltage as shown in FIGS. 4 and 7, the method of controlling the rescue device 1 comprises steps of:
A) detecting the total voltage of the first rechargeable battery 11 and the second rechargeable battery 12 being equal to or more than the threshold value 15V by using the detecting unit 32 as illustrated in FIG. 4 (for example, the voltage of each of the first rechargeable battery 11 and the second rechargeable battery 12 is 10V, as shown in FIG. 4), wherein the controlling unit 33 controls the OFF of the first relay 16, the OFF of the second relay 17, and the ON of the third relay 18 so as to acquire the power from the first rechargeable battery 11 and the second rechargeable battery 12 via the second positive-electrode circuit 22 and to boost the output voltage of 28V to charge the supercapacitor module 15 via the booster module 14.
B) detecting the supercapacitor module 15 to reach the operating voltage of 24V by using the detecting unit 32, as shown in FIG. 7, wherein the controlling unit 33 controls the ON of the first relay 16, the OFF of the second relay 17 and the OFF of the third relay 18, and the supercapacitor module 15 is completely rechargeable to supply the power to the vehicle electrical control device 13 from the first positive-electrode circuit 21 via the first relay 16, thus starting and rescuing the vehicle.

A method of rescuing the first situation is displayed on a user interface of the power rescue APP 35 so that a user learns the vehicle battery pack 10 is in the low voltage by way of the user interface and a recharging state of the supercapacitor module 15, wherein when the supercapacitor module 15 is fully rechargeable, the vehicle is started manually or by using the power rescue APP 35.

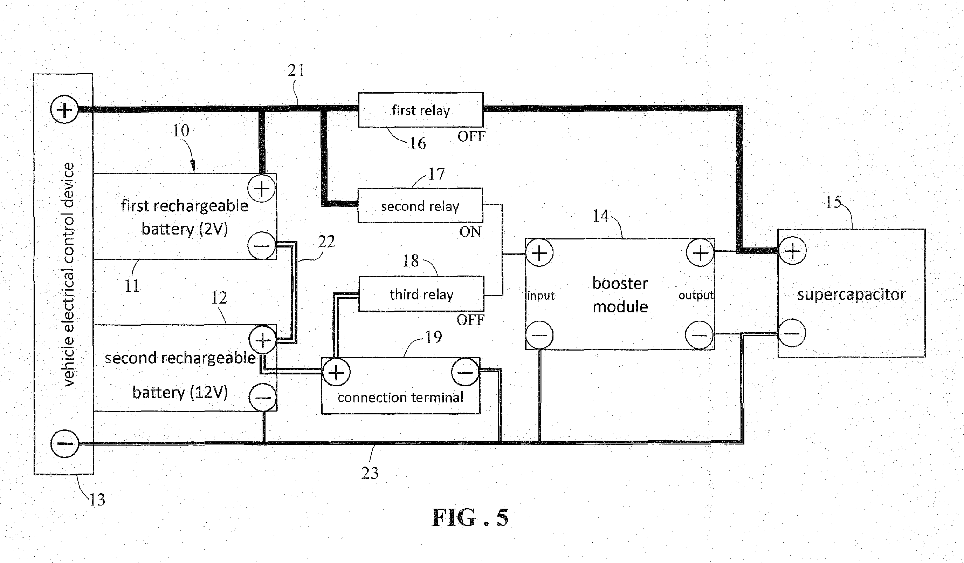

In a second situation, when the vehicle battery pack 10 is in a low voltage as shown in FIGS. 5 and 7, the method of controlling the rescue device 1 comprises steps of:
A) detecting the total voltage of the first rechargeable battery 11 and the second rechargeable battery 12 being less than the threshold value 15V but more than a low standard value 9V by using the detecting unit 32 as illustrated in FIG. 5, wherein one of the first rechargeable battery 11 or the second rechargeable battery 12 is broken (for example, the voltage of one of the first rechargeable battery 11 and the second rechargeable battery 12 is 2V, and the other of the first recharge battery 11 and the second rechargeable battery 12 is 12V as shown in FIG. 5), the controlling unit 33 controls the OFF of the first relay 16, the ON of the second relay 17, and the OFF of the third relay 18 so as to acquire the power from the first rechargeable battery 11 or the second rechargeable battery 12 which is not broken via the first positive-electrode circuit 21 and to boost the output voltage of 28V to charge the supercapacitor module 15 via the booster module 14.
B) detecting the supercapacitor module 15 to reach the operating voltage of 24V by using the detecting unit 32, as shown in FIG. 7, wherein the controlling unit 33 controls the ON of the first relay 16, the OFF of the second relay 17 and the OFF of the third relay 18, and the supercapacitor module 15 is completely rechargeable to supply the power to the vehicle electrical control device 13 from the first positive-electrode circuit 21 via the first relay 16, thus starting and rescuing the vehicle.

A method of rescuing the second situation is displayed on the user interface of the power rescue APP 35 so that a user learns the vehicle battery pack 10 is in the low voltage by way of the user interface and the recharging state of the supercapacitor module 15, wherein when the supercapacitor module 15 is fully rechargeable, the vehicle is started manually or by using the power rescue APP 35.

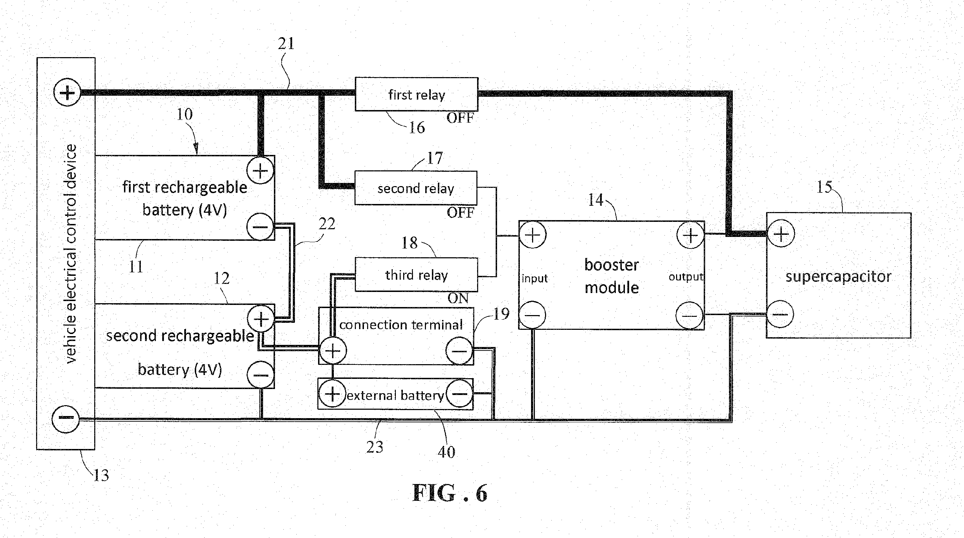

In a third situation, when the vehicle battery pack 10 is in the low voltage as shown in FIGS. 6 and 7, the method of controlling the rescue device 1 comprises steps of
A) detecting the total voltage of the first rechargeable battery 11 and the second rechargeable battery 12 being less the low standard value 9V by using the detecting unit 32 as illustrated in FIG. 6 (for instance, the first rechargeable battery 11 and the second rechargeable battery 12 are broken, so the total voltage of the first rechargeable battery 11 and the second rechargeable battery 12 is 4V, as shown in FIG. 6), wherein the controlling unit 33 controls the OFF of the first relay 16 and the OFF of the second relay 17 so that the power rescue APP 35 sends a notice to execute an electrical connection of an external battery and to judge whether the connection terminal 19 is electrically connected with the external battery 40 of 12V. If so, the third relay 18 is ON to acquire the power from the external battery 40 via the second positive-electrode circuit 22 and to boost the output voltage of 28V to charge the supercapacitor module 15 via the booster module 14.
B) detecting the supercapacitor module 15 to reach the operating voltage of 24V by using the detecting unit 32, as shown in FIG. 7, wherein the controlling unit 33 controls the ON of the first relay 16, the OFF of the second relay 17 and the OFF of the third relay 18, and the supercapacitor module 15 is completely rechargeable to supply the power to the vehicle electrical control device 13 from the first positive-electrode circuit 21 via the first relay 16, thus starting and rescuing the vehicle.

A method of rescuing the third situation is displayed on the user interface of the power rescue APP 35 so that a user learns the vehicle battery pack 10 is broken in the low voltage by way of the user interface, and the connection terminal 19 is electrically connected with the external battery 40, wherein when the user learns the supercapacitor module 15 is fully rechargeable by way of the user interface, the vehicle is started manually or by using the power rescue APP 35.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A rescue device (1) of boosting 24 volts to a supercapacitor for vehicle(s) being electrically connected a circuit system in which a vehicle battery pack (10) and a vehicle electrical control device (13) are connected parallelly; the vehicle battery pack (10) including a first rechargeable battery (11) and a second rechargeable battery (12) connected with the first rechargeable battery (11), the rescue device (1) including a booster module (14), a supercapacitor module (15), a first relay (16), a second relay (17), a third relay (18), and a rescue control module (30);
wherein the booster module (14) includes an output electrode parallelly connected with the supercapacitor module (15);
wherein a positive electrode of the vehicle electrical control device (13), a positive electrode of the first rechargeable battery (11), the first relay (16) and a positive electrode of the supercapacitor module (15) are electrically connected to produce a first positive-electrode circuit (21);
wherein the second relay (17) is electrically connected with the positive electrode of the first rechargeable battery (11) and an input positive electrode of the booster module (14), and the second relay (17) is electrically connected with the first positive-electrode circuit (21);
wherein a negative electrode of the first rechargeable battery (11), a positive electrode of the second rechargeable battery (12), the third relay (18) and the input positive electrode of the booster module (14) are electrically connected produce a second positive-electrode circuit (22);
wherein a negative electrode of the vehicle electrical control device (13), a negative electrode of the second rechargeable battery (12), the input positive electrode of the booster module (14), and a negative electrode of the supercapacitor module (15) are electrically connected to produce a negative-electrode circuit (23); and
wherein the rescue control module (30) includes a microprocessor (31), a detecting unit (32) and a controlling unit (33) which are both commanded, controlled, ordered, and managed by the microprocessor (31), the detecting unit (32) is configured to detect a voltage of the first rechargeable battery (11), the second rechargeable battery (12), the first positive-electrode circuit (21), the second positive-electrode circuit (22) and the supercapacitor module (15); wherein the detecting unit (32) is also configured to detect a total voltage of the first rechargeable battery (11) and the second rechargeable battery (12); the controlling unit (33) is selectively control an ON or OFF of the first relay (16), the second relay (17) and the third relay (18) based on a detected result of the detecting unit (32); the microprocessor (31) is electrically communicated with a power rescue APP (35) via.a wireless communication module (34), and the power rescue APP (35) is built in a smart mobile device.

2. The rescue device (1) as claimed in claim 1 further comprising a connection terminal (19), wherein a positive electrode of the connection terminal (19) is electrically connected with the positive electrode of the second rechargeable battery (12) and the third relay (18); a negative electrode of the connection terminal (19) is electrically connected with the negative-electrode circuit (23).

3. A method of controlling the rescue device (1) as claimed in claim 1 comprises steps of
1) detecting whether a total voltage of the first rechargeable battery (11) and the second rechargeable battery (12) is more than a threshold value by using the detecting unit (32), wherein the controlling unit (33) controls the OFF of the first relay (16), the OFF of the second relay (17), and the ON of the third relay (18) so as to acquire the power from the first rechargeable battery (11) and the second rechargeable battery (12) via the second positive-electrode circuit (22) and to boost an output voltage to charge the supercapacitor module (15) via the booster module (14);
2) detecting the supercapacitor module (15) to reach an operating voltage by using the detecting unit (32), wherein the controlling unit (33) controls the ON of the first relay (16), the OFF of the second relay (17) and the OFF of the third relay (18) via the first positive-electrode circuit (21), and the supercapacitor module (15) and the vehicle battery pack (10) operate to supply the power to the vehicle electrical control device (13).

4. A method of controlling the rescue device (1) as claimed in claim 1 comprises steps of:
A) detecting a total voltage of the first rechargeable battery (11) and the second rechargeable battery (12) being equal to or more than a threshold value by using the detecting unit (32), wherein the controlling unit (33) controls the OFF of the first relay (16), the OFF of the second relay (17), and the ON of the third relay (18) so as to acquire the power from the first rechargeable battery (11) and the second rechargeable battery (12) via the second positive-electrode circuit (22) and to boost an output voltage to charge the supercapacitor module (15) via the booster module (14);
B) detecting the supercapacitor module (15) to reach an operating voltage by using the detecting unit (32), wherein the controlling unit (33) controls the ON of the first relay (16), the OFF of the second relay (17) and the OFF of the third relay (18), and the supercapacitor module (15) is completely rechargeable to supply the power to the vehicle electrical control device (13) from the first positive-electrode circuit (21) via the first relay (16), thus starting the vehicle electrical control device (13).

5. A method of controlling the rescue device (1) as claimed in claim 1 comprises steps of:
A) detecting a total voltage of the first rechargeable battery (11) and the second rechargeable battery (12) being less than a threshold value but more than a low standard value by using the detecting unit (32), wherein the controlling unit (33) controls the OFF of the first relay (16), the ON of the second relay (17), and the OFF of the third relay (18) so as to acquire the power from the first rechargeable battery (11) or the second rechargeable battery (12) via the first positive-electrode circuit (21) and to boost an output voltage to charge the supercapacitor module (15) via the booster module (14);
B) detecting the supercapacitor module (15) to reach an operating voltage by using the detecting unit (32), wherein the controlling unit (33) controls the ON of the first relay (16), the OFF of the second relay (17) and the OFF of the third relay (18), and the supercapacitor module (15) is completely rechargeable to supply the power to the vehicle electrical control device (13) from the first positive-electrode circuit (21) via the first relay (16), thus starting the vehicle electrical control device (13).

6. A method of controlling the rescue device (1) as claimed in claim 2 comprises steps of
A) detecting a total voltage of the first rechargeable battery (11) and the second rechargeable battery (12) being less a low standard value by using the detecting unit (32), wherein the controlling unit (33) controls the OFF of the first relay (16) and the OFF of the second relay (17), the connection terminal (19) is electrically connected with an external battery (40) of 12V, and the third relay (18) is ON to acquire the power from the external battery (40) via the second positive-electrode circuit (22) and to boost an output voltage to charge the supercapacitor module (15) via the booster module (14);
B) detecting the supercapacitor module (15) to reach an operating voltage by using the detecting unit (32), wherein the controlling unit (33) controls the ON of the first relay (16), the OFF of the second relay (17) and the OFF of the third relay (18), and the supercapacitor module (15) is completely rechargeable to supply the power to the vehicle electrical control device (13) from the first positive-electrode circuit (21) via the first relay (16), thus starting vehicle electrical control device (13).
